# DEMANDE DE BREVET EUROPEEN

(11) **EP 1 865 176 A1**
(43) Date de publication de la demande: **12.12.2007**
(21) Numéro de dépôt: 07301073.8
(22) Date de dépôt: 30.05.2007
(51) Int. Cl.: F02D 41/00, F02B 37/12, F02B 37/013

(54) **Moteur à combustion biturbo étage**

(30) Priorité: 01.06.2006 FR 0604902
(71) Demandeur: RENAULT S.A.S., 92100 Boulogne Billancourt (FR)
(72) Inventeur: FONTVIEILLE, Laurent, 91190, GIF SUR YVETTE (FR)

(57) **Abrégé**

Moteur à combustion comprenant un collecteur d'admission, des turbocompresseurs haute pression et basse pression, chacun desdits turbocompresseurs possédant une turbine propre et un compresseur propre entraîné à rotation par ladite turbine, chacune des turbines étant disposée sur un ensemble d'échappement de gaz brûlés du moteur pour y collecter de l'énergie par l'intermédiaire desdits gaz circulant dans cet ensemble d'échappement et chacun desdits compresseurs étant disposé sur un ensemble d'admission d'air relié audit collecteur d'admission afin de l'alimenter en air comprimé, le moteur comportant en outre un premier moyen mécanique de réglage d'une différence de pression de gaz d'échappement entre 1'amont et 1'aval de la turbine du turbocompresseur haute pression et un second moyen mécanique de réglage d'une différence de pression de gaz d'échappement entre l'amont et l'aval de la turbine du turbocompresseur basse pression et en ce que le moteur comporte un régulateur dit haute pression adapté pour commander le premier moyen mécanique de réglage d'une différence de pression et un régulateur dit basse pression adapté pour commander le second moyen mécanique de réglage d'une différence de pression, caractérisé en ce qu'il comporte un moyen d'arbitrage adapté pour autoriser l'un seulement des deux régulateurs à transmettre un signal de commande régulé en fonction d'une pression régnant dans le moteur et estimée par des moyens d'estimation de pression.

## Description

La présente invention concerne, de façon générale, le domaine de la régulation de moteurs comportant deux turbocompresseurs préférentiellement étagés.

Plus particulièrement, l'invention concerne un moteur à combustion comprenant un collecteur d'admission, un turbocompresseur haute pression et un turbocompresseur basse pression, chacun desdits turbocompresseurs possédant une turbine propre et un compresseur propre entrainé à rotation par ladite turbine, chacune des turbines étant disposée sur un ensemble d'échappement de gaz brûlés du moteur pour y collecter de l'énergie par l'intermédiaire desdits gaz circulant dans cet ensemble d'échappement et chacun desdits compresseurs étant disposé sur un ensemble d'admission d'air relié audit collecteur d'admission afin de l'alimenter en air comprimé, le moteur comportant en outre :
- un premier moyen mécanique de réglage d'une différence de pression de gaz d'échappement entre l'amont et l'aval de la turbine du turbocompresseur haute pression ;
- un second moyen mécanique de réglage d'une différence de pression de gaz d'échappement entre l'amont et l'aval de la turbine du turbocompresseur basse pression ;
- un régulateur dit haute pression adapté pour commander le premier moyen mécanique de réglage d'une différence de pression et ;
- un régulateur dit basse pression adapté pour commander le second moyen mécanique de réglage d'une différence de pression.
   Il est connu du document brevet WO 2005/024201 un moteur du type précédemment défini et comportant deux turbocompresseurs. Pour ajuster la pression régnant dans le collecteur d'admission autour d'une valeur de consigne ce moteur utilise des régulateurs commandant des premier et second moyens mécaniques de réglage de la pression constitués par des circuits de contournement des turbines haute et basse pression chacun sélectivement obturé par une vanne haute ou basse pression.
   Chaque vanne de contournement haute ou basse pression permet d'ajuster la quantité d'énergie collectée par la turbine (haute ou basse pression) en faisant varier la position de cette vanne de contournement des turbines.
   Etant donné que ces vannes de contournement sont montées en parallèle des turbines plus ces vannes de contournement sont ouvertes et moins la turbine contournée reçoit de gaz d'échappement ce qui entraine une réduction de la puissance mécanique délivrée au compresseur associé à cette turbine.
   Dans ce contexte, la présente invention a pour but de proposer un moteur à combustion interne doté d'un turbocompresseur dit basse pression et d'un turbocompresseur haute pression et permettant une régulation améliorée d'une pression de gaz dans le moteur telle que par exemple une pression de gaz dans le collecteur d'admission du moteur, cette régulation étant préférentiellement adaptable aux conditions de fonctionnement du moteur.
   A cette fin, le procédé de régulation de pression de l'invention, par ailleurs conforme à la définition générique qu'en donne le préambule défini précédemment, est essentiellement caractérisé en ce qu'il comporte un moyen d'arbitrage adapté pour autoriser l'un seulement des deux régulateurs à transmettre un signal de commande régulé en fonction d'une pression régnant dans le moteur et estimée par des moyens d'estimation de pression.
   Le moyen d'arbitrage permet de déterminer lequel des régulateurs haute ou basse pression est autorisé à envoyer à un instant donné un signal de commande régulé au moyen mécanique de réglage de pression d'échappement correspondant. Cette caractéristique est avantageuse car cela permet d'éviter la prise en compte par chaque régulateur de l'autre régulateur avant de transmettre un signal régulé puisque ces régulateurs n'interviennent jamais ensemble pour transmettre un signal régulé. Il en résulte une simplification des calculs réalisés par chaque régulateur. De plus cette solution évite les risques de conflits entre les régulateurs qui sans cette solution d'arbitrage risqueraient de transmettre des signaux de commande régulés induisant des effets contraires et difficilement maîtrisables.
   Le moteur de l'invention est préférentiellement un moteur à turbocompresseurs étagés c'est-à-dire un moteur ayant des turbines montées en série dans le sens d'écoulement des gaz d'échappement dans l'ensemble d'échappement de gaz brûlés et ayant deux compresseurs montés en série au niveau de l'ensemble d'admission d'air.
   Les définitions suivantes sont à prendre en compte pour la compréhension de l'invention décrite .
- le turbocompresseur haute pression est un turbocompresseur dont la turbine est située en amont de la turbine du turbocompresseur basse pression, vis-à- vis du sens d'écoulement des gaz dans les turbines. Ainsi les termes haute et basse pressions attachés aux turbocompresseurs expriment l'idée selon laquelle le turbocompresseur haute pression reçoit une pression de gaz d'échappement supérieure à la pression des gaz d'échappement reçue par le turbocompresseur basse pression qui est situé en aval du turbocompresseur haute pression ;
- la turbine basse pression est la turbine appartenant au turbocompresseur dit basse pression et la turbine haute pression est la turbine appartenant au turbocompresseur dit haute pression ;
- le compresseur basse pression est le compresseur appartenant au turbocompresseur basse pression et le compresseur haute pression est le compresseur appartenant au compresseur haute pression ;
- le terme pression de suralimentation désigne la pression dans le collecteur d'admission P2.

On peut également faire en sorte que le régulateur dit haute pression soit adapté pour calculer et transmettre au premier moyen mécanique un signal de commande régulé en fonction de ladite pression mesurée ou estimée régnant dans le moteur et que le régulateur dit basse pression soit adapté pour calculer et transmettre audit second moyen mécanique un signal de commande régulé en fonction de ladite pression mesurée ou estimée régnant dans le moteur.

Il est avantageux que les deux régulateurs soient chacun adaptés pour transmettre un signal régulé propre au régulateur qui soit régulé en fonction d'une seule et même pression mesurée ou estimée dans le moteur.

On peut également faire en sorte que les moyens d'estimation de pression comportent au moins un capteur de pression régnant dans le collecteur d'admission. L'estimation de la pression peut :
- soit être faite par calcul à partir de paramètres mesurés de fonctionnement du moteur autres que la pression que l'on cherche à estimer ;
- soit être préférentiellement obtenue par mesure directe de cette pression grâce à un capteur.

Dans ce mode de réalisation où le moteur comporte un capteur de pression régnant dans le collecteur d'admission la pression régnant dans le moteur est en fait la pression régnant dans le collecteur d'admission.

On peut également faire en sorte que les moyens mécaniques de réglage de la pression des gaz d'échappement comportent des ailettes de turbines à géométrie variable, ces ailettes étant mobiles entre une configuration de pénétration maximale dans un flux de gaz d'échappement interne à la turbine et une configuration de pénétration minimale dans le flux de gaz d'échappement interne à la turbine, ces pales ayant une surface totale en contact avec le flux de gaz d'échappement qui est supérieure en configuration de pénétration maximale par rapport à ce qu'elle est en configuration de pénétration minimale.

Ce mode de réalisation permet d'adapter l'invention sur des moteurs possédant des turbines à géométrie variable.

On peut également faire en sorte que les moyens mécaniques de réglage de la pression des gaz d'échappement comportent au moins un circuit de contournement de turbine(s) monté en parallèle de l'une au moins des dites turbines, ce circuit de contournement comportant au moins une vanne de décharge adaptée pour délimiter une section de passage de gaz d'échappement par le circuit de contournement, cette vanne de décharge étant mobile entre une configuration de décharge dans laquelle la section de passage de gaz par le circuit de contournement est maximale et une configuration de transit des gaz d'échappement par la turbine dans laquelle la section de passage de gaz par le circuit de contournement est minimale.

Ce mode de réalisation permet d'adapter l'invention sur des moteurs choisis pour posséder au moins une vanne de décharge adaptée pour commander sélectivement le passage de gaz d'échappement dans la turbine ou dans un circuit de contournement de cette turbine.

On peut également faire en sorte que ledit moyen d'arbitrage soit adapté pour autoriser la transmission d'un signal de commande régulé par le régulateur dit haute pression uniquement si le moteur se trouve dans un premier domaine de fonctionnement moteur prédéterminé, le moyen d'arbitrage étant en outre adapté pour autoriser la transmission d'un signal de commande régulé par le régulateur dit basse pression uniquement si le moteur se trouve dans un second domaine de fonctionnement moteur prédéterminé, les premiers et seconds domaines de fonctionnement étant disjoints l'un de l'autre et chaque domaine étant déterminé par un ensemble de points de fonctionnement moteur et chaque point de fonctionnement moteur étant défini par une valeur de régime moteur et une valeur de couple moteur, le moteur comportant en outre des moyens d'identification du domaine de fonctionnement dans lequel se trouve ledit moteur.

Les premier et second domaines de fonctionnement étant disjoints l'un de l'autre il en résulte que les signaux de commande régulés par le régulateur haute pression et les signaux régulés par le régulateur basse pression sont toujours transmis à des instants différents et à des instants adaptés au fonctionnement du moteur.

Les domaines sont choisis pour optimiser la vitesse et la précision de la régulation de pression dans le collecteur d'admission. Ce mode de réalisation permet au moyen d'arbitrage d'identifier rapidement et à chaque instant de façon relativement simple celui des régulateurs qui doit être autorisé à transmettre un signal régulé.

On peut également faire en sorte que le régulateur dit haute pression soit adapté pour qu'en l'absence de transmission d'un signal de commande régulé en fonction de ladite pression régnant dans le moteur celui-ci transmette au premier moyen mécanique de réglage un signal de commande de pré positionnement propre au premier moyen mécanique, chaque signal de pré positionnement étant calculé par un moyen de calcul en fonction de valeurs courantes estimées de régime moteur et de couple moteur.

Ce mode de réalisation permet par exemple en cas de défaillance des régulateurs haute ou basse pression d'avoir un pré positionnement des premier et second moyens mécaniques ce qui autorise un fonctionnement dégradé du moteur avec une fonction active des turbocompresseurs.

Ce mode de réalisation permet également de pré positionner les premier et second moyens mécanique lorsque le moteur ne fonctionne pas dans l'un des premier ou second domaines de fonctionnement.

On peut également faire en sorte que le régulateur dit basse pression soit adapté pour qu'en l'absence de transmission d'un signal de commande régulé en fonction de ladite pression régnant dans le moteur celui-ci transmette au second moyen mécanique de réglage un signal de commande de pré positionnement propre au second moyen mécanique, chaque signal de pré positionnement étant calculé par un moyen de calcul en fonction de valeurs courantes estimées de régime moteur et de couple moteur.

Ce mode de réalisation de l'invention permet un contrôle de chacun des moyens mécaniques de réglage de différences de pression y compris lorsque celui-ci ne reçoit pas de signal régulé en fonction de la pression. Ce contrôle spécifique transmet un signal de pré positionnement du moyen mécanique de réglage en fonction du régime et du couple moteur.

Lorsqu'un desdits premier ou second moyens mécaniques de réglage de différences de pressions ne reçoit pas de signal de commande régulé en fonction de la mesure de pression régnant dans le collecteur d'admission on fait alors en sorte qu'il reçoive un signal de commande de pré positionnement propre au premier ou second moyen mécanique et déterminé en fonction de valeurs courantes mesurées et/ou estimées de régime moteur et de couple moteur.

On peut également faire en sorte que le moteur de l'invention comporte des moyens de calcul adaptés pour calculer ledit signal de commande régulé en fonction d'une pression régnant dans le moteur, et d'une valeur de consigne de pression d'admission dans le collecteur d'admission, cette valeur de consigne de pression d'admission étant elle-même déterminée par ledit moyen de calcul en fonction de valeurs courantes de régime moteur et de couple moteur et selon une fonction prédéterminée et mémorisée.

On peut également faire en sorte que le moyen de calcul soit adapté pour calculer cette valeur de consigne de pression d'admission dans le collecteur d'admission en fonction de valeurs mesurées de pression atmosphérique et de valeurs de température d'air entrant dans le moteur.

L'invention peut également concerner un procédé de régulation d'une pression régnant dans le moteur de l'invention précédemment défini. Un tel procédé est en particulier un procédé de régulation de pression dans un collecteur d'admission d'un moteur à combustion interne doté d'un turbocompresseur haute pression et d'un turbocompresseur basse pression, chacun desdits turbocompresseurs possédant une turbine propre et un compresseur propre entrainé à rotation par ladite turbine, chacune des turbines étant disposée sur un ensemble d'échappement de gaz brûlés du moteur pour y collecter de l'énergie par l'intermédiaire desdits gaz circulant dans cet ensemble d'échappement et chacun desdits compresseurs étant disposé sur un ensemble d'admission d'air relié audit collecteur d'admission afin de l'alimenter en air comprimé, le procédé comprenant .
- l'estimation (par exemple par mesure) de la pression régnant dans le collecteur d'admission ;
- la détermination par le moyen d'arbitrage de celui des régulateurs devant transmettre un signal de commande régulé à l'un des moyens mécaniques de réglage de la pression des gaz d'échappement ;
- la transmission dudit signal régulé en fonction de ladite estimation de pression de manière à réguler la pression régnant dans le collecteur autour d'une première valeur de consigne de pression d'admission déterminée en fonction de paramètres de fonctionnement dudit moteur.

D'autres caractéristiques et avantages de l'invention ressortiront clairement de la description qui en est faite ci-après, à titre indicatif et nullement limitatif, en référence aux dessins annexés, dans lesquels:
la figure 1 représente un moteur adapté pour la mise en oeuvre du procédé selon l'invention ;
la figure 2 représente un graphique exprimant en fonction du régime et du couple moteur les positions des différents domaines de fonctionnement du moteur ;
la figure 3 représente un schéma logique pour l'obtention d'un signal de commande 20b régulé en fonction de la mesure de pression régnant dans le collecteur d'admission, ce signal régulé 20b étant transmis au second moyen mécanique de réglage 17b aussi appelé vanne de décharge 17b du circuit de contournement de turbine basse pression;
la figure 4 représente un schéma logique pour l'obtention d'un signal de commande 20a régulé en fonction de la mesure de pression régnant dans le collecteur d'admission, ce signal régulé 20a étant transmis au premier moyen mécanique de réglage 17a aussi appelé vanne de décharge 17a du circuit de contournement de turbine haute pression ;
la figure 5 représente un schéma logique permettant l'obtention de la première valeur de consigne de pression d'admission Cons P2 aussi appelée consigne de pression de suralimentation ;
la figure 6 représente un schéma logique pour l'obtention d'un signal de commande de contournement du compresseur haute pression 9 par l'air circulant dans l'ensemble d'admission d'air 12 ;
la figure 7 représente un schéma logique permettant un arbitrage du régulateur haute ou basse pression qui doit envoyer un éventuel signal de commande régulé 20a ou 20b ou un signal de pré positionnement Prepos a, Prepos b.

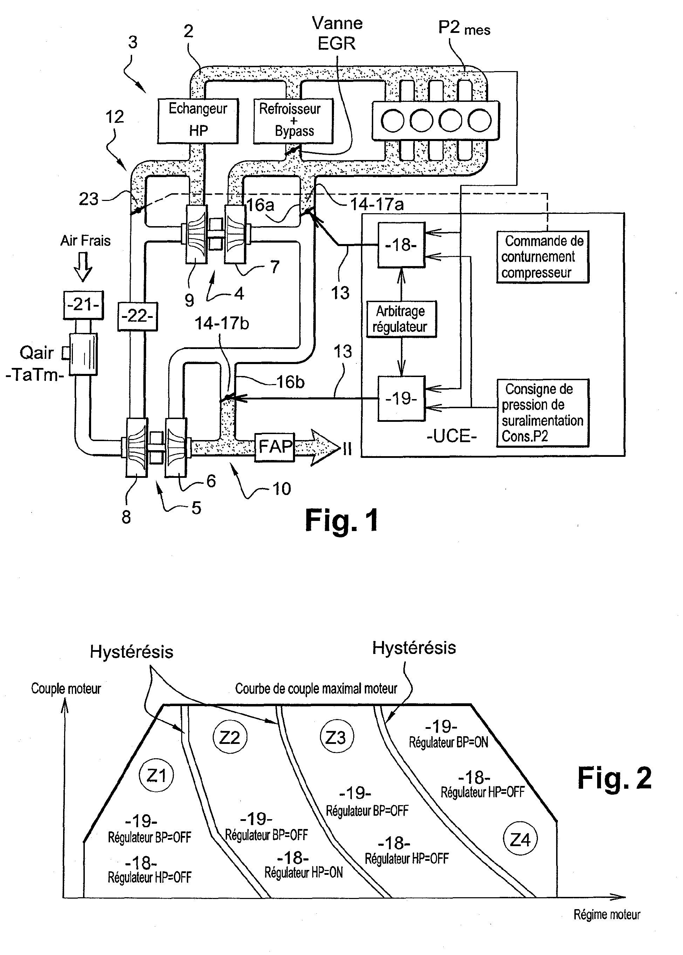

Le moteur 3 de la figure 1 comporte 4 chambres de combustions alimentées en air par l'intermédiaire d'un ensemble d'admission d'air comprenant un collecteur d'admission 2.

Le moteur comporte en outre un ensemble d'échappement 10 de gaz brûlés aussi appelés gaz d'échappement 11.

Le moteur comporte en outre un turbocompresseur haute pression 4 et un turbocompresseur basse pression 5, ce dernier étant disposé pour pourvoir être alimenté par des gaz d'échappement 11 provenant du turbocompresseur haute pression 4. La turbine haute pression 7 du turbocompresseur haute pression 4 est disposée au niveau de l'ensemble d'échappement 10 de gaz brûlés du moteur de manière à être en amont de la turbine basse pression 6 du turbocompresseur basse pression 5.

L'ensemble d'échappement comporte également un circuit de contournement 16a de la turbine haute pression 7 et un circuit de contournement 16b de la turbine basse pression 6, chacun de ces circuits de contournement est constitué par une conduite dont une extrémité débouche en amont de la turbine à contourner et dont l'autre extrémité débouche en aval de cette même turbine. Des vannes de décharge 17a et 17b sont respectivement disposées pour contrôler l'écoulement dans les conduites du circuit de contournement 16a de turbine haute pression 7 et du circuit de contournement 16b de turbine basse pression 6.

Un filtre à particules FAP est disposé sur une section aval de l'ensemble d'échappement de gaz brûlés 10 et donc en aval des turbines.

Chaque turbocompresseur dispose d'un compresseur entrainé à rotation par la turbine de ce même turbocompresseur.

Les compresseurs sont disposés sur l'ensemble d'admission d'air 12 de telle manière que l'air alimentant le moteur 3 puisse être successivement compressé par le compresseur basse pression 8 puis par le compresseur haute pression 9.

En entrée de l'ensemble d'admission d'air 12 est disposé un filtre à air 21 relié au compresseur basse pression 8 par une conduite dédiée.

L'ensemble d'admission d'air 12 comporte un circuit de contournement du compresseur haute pression pour permettre l'admission d'air dans les chambres de combustion du moteur sans que cet air transite et soit compressé par le compresseur haute pression 9. Une vanne de contournement 23 permet d'orienter l'air admis soit vers le compresseur haute pression soit vers le circuit de contournement. Ce circuit de contournement est constitué par une conduite dont les extrémités sont respectivement reliées en amont et en aval du compresseur haute pression 9.

Un échangeur thermique haute pression HP est disposé entre le circuit de contournement du compresseur et les chambres de combustion du moteur pour permettre la régulation de la température de l'air admis.

Un échangeur dit basse pression 22 est disposé entre les compresseurs haute et basse pression pour contrôler la température des gaz compressés par le compresseur basse pression 8.

Le moteur comporte un circuit de recirculation de gaz brûlés disposé entre l'ensemble d'échappement 10 et l'ensemble d'admission d'air 12. Une vanne de recirculation contrôle le transit de gaz brûlés vers le collecteur d'admission.

Différents capteurs sont répartis sur le moteur pour y collecter des informations de fonctionnement. On retrouve un capteur de pression pour mesurer la pression dans le collecteur d'air P2mes.

Le moteur comporte également une unité de commande électronique UCE qui est reliée aux différents capteurs pour en recevoir des informations mesurées et reliée aux actionneurs que sont notamment les vannes précitées pour les commander.

Cette unité de commande électronique UCE comporte plusieurs blocs fonctionnels que sont :
- un régulateur haute pression 18 pour la commande de la vanne de décharge haute pression 17a du circuit de contournement 16a haute pression,
- un régulateur basse pression 19 pour la commande de la vanne de décharge basse pression 17b du circuit de contournement 16b basse pression,
- une commande bistable de la vanne de contournement 23 du compresseur haute pression 9,
- un bloc de calcul de consigne de pression de suralimentation Cons P2 (aussi appelée première valeur de consigne de pression d'admission Cons P2),
- un bloc d'arbitrage des deux régulateurs HP et BP (Arbitrage régulateur) permettant de déterminer celui des deux régulateur 18 ou 19 qui est autorisé à transmettre un signal de commande régulé 20 en fonction de la pression P2mes.

Ce mode de réalisation permet de faire en sorte que le ou les signaux de commandes régulés 20a transmis par le régulateur dit haute pression 18 soient toujours transmis à des instants différents que le(s) signaux de commandes régulés 20b transmis par le régulateur dit basse pression 19. En d'autres termes le moyen d'arbitrage est adapté pour adopter une configuration d'émission de signal de commande régulé du régulateur haute pression ou alternativement une configuration d'émission de signal de commande régulé du régulateur basse pression. Lorsque le moyen d'arbitrage est en configuration d'émission de signal de commande régulé du régulateur haute pression seul le régulateur haute pression est autorisé par le moyen d'arbitrage à transmettre un signal de commande régulé et le régulateur basse pression étant alors interdit d'émettre un signal de commande régulé. Lorsque le moyen d'arbitrage est en configuration d'émission de signal de commande régulé du régulateur basse pression seul le régulateur basse pression est autorisé par le moyen d'arbitrage à transmettre un signal de commande régulé et le régulateur haute pression est alors interdit d'émettre un signal de commande régulé.

La régulation de pression dans le collecteur minimise en permanence l'écart entre la consigne Cons P2 et la mesure de la pression suralimentation P2mes. Dans le cas particulier d'une suralimentation étagée, la régulation de suralimentation est assurée par deux régulateurs. Il y a donc un régulateur par turbocompresseur. Les deux régulateurs 18 et 19 ne fonctionnent pas simultanément et leurs activations sont définies selon le point de fonctionnement moteur (régime R et couple C moteur). Il est possible de définir les 4 zones ou domaines de fonctionnement suivantes Z1, Z2, Z3 et Z4 tel que cela est représenté sur la figure 2.

Parmi les 4 domaines de fonctionnement Z1, Z2, Z3, Z4 de la régulation de pression, la limitation de pression avant turbine est assurée par le régulateur 19 *(**R**_{HP})* dans le domaine Z2 et par le régulateur 18 *(**R**_{BP})* dans le domaine Z4.

Ces deux domaines Z2, Z4 sont séparés entre eux par un domaine Z3 dans lequel les deux régulateurs 18 et 19 sont désactivés et ne transmettent pas de signal 20 limitant la pression avant turbine. Cette séparation évite le risque que les deux régulateurs transmettent en même temps un signal 20a ou 20b visant à limiter la pression avant turbine P3 ce qui risquerait de provoquer une instabilité du moteur.

Les frontières entre les domaines Z1, Z2, entre Z2 et Z3 et entre Z3 et Z4 sont formées par des fonctions hystérésis permettant de déterminer sans ambigüité le domaine de fonctionnement dans lequel se trouve le moteur sans risquer que le système ne change de zone de façon instable.

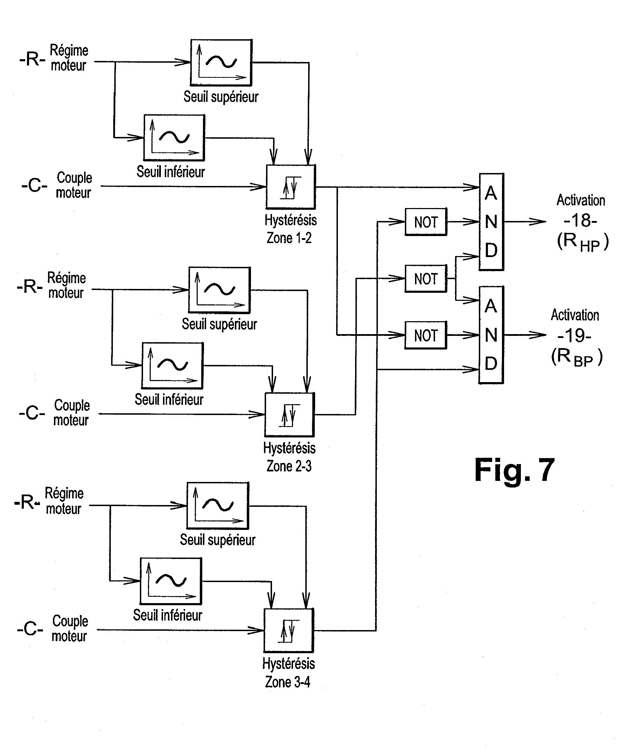

Le choix de l'activation de l'un ou de l'autre des régulateurs 18 ou 19 est réalisé par le bloc fonction arbitrage de l'UCE. Le détail de ce bloc est présenté sur la figure 7.

Pour déterminer le domaine de fonctionnement ou zone Z1, Z2, Z3 ou Z4 dans lequel se trouve le moteur à un instant donné, on entre des valeurs courantes de couple C et de régime R. Par un jeu de portes logique on détermine ainsi en fonction du couple C et du régime R courant celui des régulateurs 18 ou 19 qui doit être activé pour réguler la pression dans le collecteur d'admission.

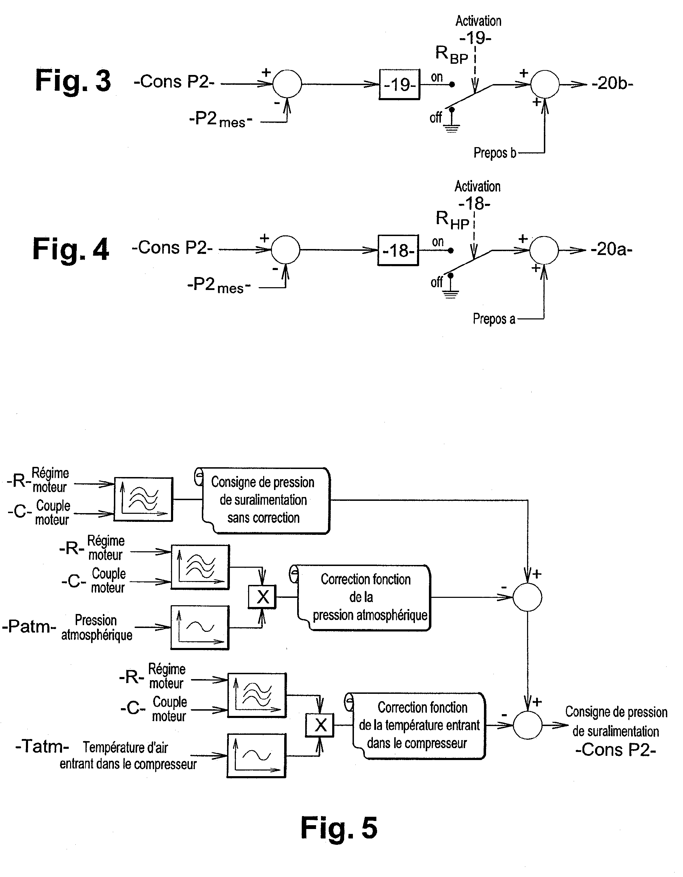

Si le régulateur déterminé comme devant être activé est le régulateur basse pression 19, alors le schéma logique de la figure 3 est mis en oeuvre pour calculer le signal 20b de commande de la vanne basse pression 17b.

Dans le cas contraire, si le régulateur déterminé comme devant être activé est le régulateur haute pression 18, alors le schéma logique de la figure 4 est mis en oeuvre pour calculer le signal 20a de commande de la vanne haute pression 17a.

Chacun des schémas des figures 3 et 4 utilise en entrées :
- la première valeur de consigne Cons P2 (consigne de pression d'admission) ;
- une mesure de la pression d'admission P2mes ;
- une consigne de pré positionnement Preposb de vanne de décharge basse pression 17b pour le schéma de la figure 3 et une consigne de pré positionnement Preposa de vanne de décharge haute pression 17a pour le schéma de la figure 4 ;
- une commande d'activation de régulateur qui est une commande d'Activation ***R**_{BP}* du régulateur 19 pour le schéma de la figure 3 et une commande d'Activation ***R**_{HP}* du régulateur 18 pour le schéma de la figure 4.
   Chacun des schémas des figures respectives 3 et 4 produit en sortie un signal de commande régulé 20a pour la vanne 17a et 20b pour la vanne 17b.

Les procédés des figures 3 et 4 possèdent une première fonction de comparaison de consigne Cons P2 avec la mesure P2mes.

Le régulateur 18 ou 19 prend en compte la première fonction de comparaison de consigne Cons P2 avec la mesure P2mes afin de réguler la pression dans le collecteur d'admission.

En sortie du régulateur 19 de la figure 3 se trouve une bascule qui permet selon sa position de prendre en compte ou non le signal 20b calculé par le régulateur 19. La position de la bascule est déterminée par l'information d'activation donnée par le signal d'Activation *R_{BP}* précédemment calculé sur le schéma logique de la figure 7.

En sortie du régulateur 18 de la figure 4 se trouve une bascule pour prendre en compte ou non le signal 20a calculé par le régulateur 18 selon que celui-ci doit être activé ou non, cette information d'activation est donnée par le signal d'Activation *R_{Hp}* précédemment calculé sur le schéma logique de la figure 7.

Si l'activation du régulateur est souhaitée alors le signal calculé par le régulateur actif est sommé par une fonction sommation avec un signal de pré positionnement qui est soit Preposb pour la figure 3 soit Preposa pour la figure 4. Le résultat de cette fonction de sommation constitue le signal 20a, 20b qui est envoyé aux moyens mécaniques de réglage de pression de gaz d'échappement 14 que sont les vannes de décharge 17a et 17b.

Dans le cas où l'activation du régulateur n'est pas souhaitée alors le signal calculé par le régulateur 18 ou 19 n'est pas pris en compte et seule une valeur de pré positionnement de vanne Preposb pour la figure 3 ou Preposa pour la figure 4 est transmise à la vanne de décharge 17a ou 17b.

Les signaux transmis en sortie des schémas des figures 3 et 4 constituent la commande des moyens mécaniques de réglage de pression des gaz d'échappement 13.

La consigne Cons P2 de pression d'admission est calculée selon le schéma logique de la figure 5 en prenant comme entrée le régime R et le couple C courant du moteur tel que mesuré(s) ou estimé(s) et la pression atmosphérique Patm ainsi que la température Tatm. Sur ce schéma on obtient dans un premier temps une valeur de consigne de pression de suralimentation sans correction à l'aide d'une fonction cartographiée dont les entrées sont le couple et le régime courant, puis dans un second temps on corrige cette consigne sans correction par des coefficients de corrections dépendants de la température de l'air et de la pression atmosphérique.

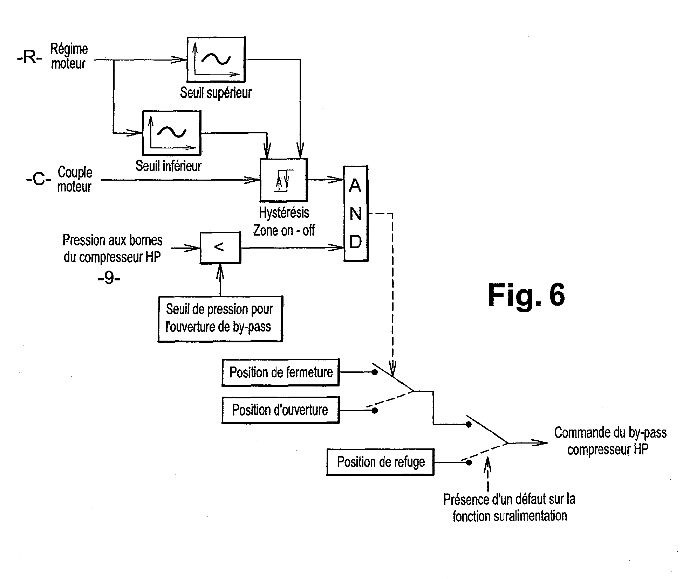

La figure 6 illustre un exemple de schéma logique permettant de commander le « by-pass », c'est-à-dire le contournement du compresseur haute pression 9 en fonction du régime moteur et du couple moteur ainsi que de la pression aux bornes du compresseur tout en prenant en compte un éventuel défaut de la fonction de suralimentation.

## Revendications

1. Moteur à combustion (3) comprenant un collecteur d'admission (2), un turbocompresseur haute pression (4) et un turbocompresseur basse pression (5), chacune des turbines (6, 7) des turbocompresseurs étant disposée sur un ensemble d'échappement et chacun des compresseurs (8, 9) des turbocompresseurs étant disposé sur un ensemble d'admission d'air (12) relié audit collecteur d'admission (2) afin de l'alimenter en air comprimé, le moteur comportant en outre un premier moyen de réglage (17a) d'une différence de pression de gaz d'échappement entre l'amont et l'aval de la turbine du turbocompresseur haute pression et un second moyen de réglage (17b) d'une différence de pression de gaz d'échappement entre l'amont et l'aval de la turbine du turbocompresseur basse pression et en ce que le moteur (3) comporte un régulateur dit haute pression (18) adapté pour commander le premier moyen de réglage (17a) d'une différence de pression et un régulateur dit basse pression (19) adapté pour commander le second moyen de réglage (17b) d'une différence de pression, **caractérisé en ce qu'**il comporte un moyen d'arbitrage adapté pour autoriser l'un seulement des deux régulateurs (18 ou 19) à transmettre un signal de commande régulé (20) en fonction d'une pression régnant dans le moteur (P2mes) et estimée par des moyens d'estimation de pression.

2. Moteur selon la revendication 1, **caractérisé en ce que** le régulateur dit haute pression (18) est adapté pour calculer et transmettre au premier moyen de réglage (17a) un signal de commande régulé (20a) en fonction de ladite pression estimée régnant dans le moteur et **en ce que** le régulateur dit basse pression (19) est adapté pour calculer et transmettre audit second moyen de réglage (17b) un signal de commande régulé (20b) en fonction de ladite pression estimée régnant dans le moteur.

3. Moteur selon l'une des revendications 1 ou 2, **caractérisé en ce que** les moyens d'estimation de pression comportent au moins un capteur de pression régnant dans le collecteur d'admission (P2mes).

4. Moteur selon l'une quelconque des revendications 1 à 3, **caractérisé en ce que** les moyens de réglage de la pression des gaz d'échappement (14) comportent des ailettes de turbines à géométrie variable, ces ailettes étant mobiles entre une configuration de pénétration maximale dans un flux de gaz d'échappement interne à la turbine (6, 7) et une configuration de pénétration minimale dans le flux de gaz d'échappement interne à la turbine (6, 7), ces pales ayant une surface totale en contact avec le flux de gaz d'échappement qui est supérieure en configuration de pénétration maximale par rapport à ce qu'elle est en configuration de pénétration minimale.

5. Moteur selon l'une quelconque des revendications 1 à 4, **caractérisé en ce que** les moyens de réglage (14) de la pression des gaz d'échappement comportent au moins un circuit de contournement de turbine(s) (16a, 16b) monté en parallèle de l'une au moins des dites turbines (6, 7), ce circuit de contournement (16a, 16b) comportant au moins une vanne de décharge (17a, 17b) adaptée pour délimiter une section de passage de gaz d'échappement par le circuit de contournement (16a, 16b), cette vanne de décharge (17a, 17b) étant mobile entre une configuration de décharge dans laquelle la section de passage de gaz par le circuit de contournement (16a, 16b) est maximale et une configuration de transit des gaz d'échappement par la turbine dans laquelle la section de passage de gaz par le circuit de contournement (16a, 16b) est minimale.

6. Moteur selon l'une quelconque des revendications précédentes, **caractérisé en ce que** ledit moyen d'arbitrage est adapté pour autoriser la transmission d'un signal de commande régulé (20a) par le régulateur dit haute pression (18) uniquement si le moteur (3) se trouve dans un premier domaine de fonctionnement moteur prédéterminé (Z2), le moyen d'arbitrage étant en outre adapté pour autoriser la transmission d'un signal de commande régulé (20b) par le régulateur dit basse pression (19) uniquement si le moteur (3) se trouve dans un second domaine de fonctionnement moteur prédéterminé (Z4), les premiers et seconds domaines de fonctionnement (Z2, Z4) étant disjoints l'un de l'autre et chaque domaine (Z2, Z4) étant déterminé par un ensemble de points de fonctionnement moteur et chaque point de fonctionnement moteur étant défini par une valeur de régime moteur (R) et une valeur de couple moteur (C), le moteur comportant en outre des moyens d'identification du domaine de fonctionnement dans lequel se trouve ledit moteur.

7. Moteur selon l'une quelconque des revendications précédentes, **caractérisé en ce que** le régulateur dit haute pression (18) est adapté pour qu'en l'absence de transmission d'un signal de commande régulé (20) en fonction de ladite pression régnant dans le moteur (P2mes) celui-ci transmette au premier moyen de réglage (17a) un signal de commande de pré positionnement (Prepos a) propre au premier moyen de réglage (17a), chaque signal de pré positionnement étant calculé par un moyen de calcul en fonction de valeurs courantes estimées de régime moteur (C) et de couple moteur (C).

8. Moteur selon l'une quelconque des revendications précédentes, **caractérisé en ce que** le régulateur dit basse pression (19) est adapté pour qu'en l'absence de transmission d'un signal de commande régulé (20) en fonction de ladite pression régnant dans le moteur (P2mes) celui-ci transmette au second moyen de réglage (17b) un signal de commande de pré positionnement (Prepos b) propre au second moyen de réglage (17b), chaque signal de pré positionnement étant calculé par un moyen de calcul en fonction de valeurs courantes estimées de régime moteur (C) et de couple moteur (C).

9. Moteur selon l'une quelconque des revendications précédentes, **caractérisé en ce qu'**il comporte des moyens de calcul adaptés pour calculer ledit signal de commande régulé (20) en fonction d'une pression régnant dans le moteur (P2mes), et d'une valeur de consigne de pression d'admission dans le collecteur d'admission (Cons P2), cette valeur de consigne de pression d'admission (Cons P2) étant elle-même déterminée par ledit moyen de calcul en fonction de valeurs courantes de régime moteur (R) et de couple moteur (C) et selon une fonction prédéterminée et mémorisée (F1) .

10. Moteur selon la revendication 9, **caractérisé en ce que** le moyen de calcul est adapté pour calculer cette valeur de consigne de pression d'admission dans le collecteur d'admission (Cons P2) en fonction de valeurs mesurées de pression atmosphérique (Patm) et de valeurs de température d'air (Tatm) entrant dans le moteur.
